# EUROPÄISCHE PATENTANMELDUNG

(11) **EP 3 896 540 A1**
(43) Veröffentlichungstag der Anmeldung: **20.10.2021**
(21) Anmeldenummer: 20169804.0
(22) Anmeldetag: 16.04.2020
(51) Int. Cl.: G05B 19/409, G06F 3/01

(54) **MASCHINE ZUR BEARBEITUNG METALLISCHER WERKSTÜCKE**

(71) Anmelder: Bystronic Laser AG, 3362 Niederönz (CH)
(72) Erfinder: Rödiger, Benjamin, 99885 Ohrdruf (DE)
(74) Vertreter: Fink Numrich Patentanwälte PartmbB

(57) **Zusammenfassung**

Die Erfindung betrifft eine Maschine (10) zur Bearbeitung metallischer Werkstücke, insbesondere Biegemaschine oder Schneidmaschine, mit einem Display (1), das eine berührungssensitive Anzeigefläche (2) zur variablen Anzeige von graphischen Bedienelementen (BE) umfasst, welche über deren Berührung auf der Anzeigefläche (2) durch einen Bediener (B) mittels seiner Hand betätigbar sind, um hierdurch Befehle zur Bedienung der Maschine (10) einzugeben. Die erfindungsgemäße Maschine zeichnet sich dadurch aus, dass das Display (1) ein oder mehrere Mittel (3, 4, 5, 6, 7) zur variablen Ausbildung von Erhebungen (8) in Bereichen der Anzeigefläche (2), an denen sich graphische Bedienelemente (BE) befinden, aufweist, wobei die Erhebungen (8) eine jeweilige Höhe von mindestens 1 mm auf der Anzeigefläche (2) haben.

## Beschreibung

Die Erfindung betrifft eine Maschine zur Bearbeitung metallischer Werkstücke, insbesondere eine Biegemaschine oder eine Schneidmaschine, wie z. B. eine Abkantpresse, eine Plasmaschneidmaschine oder eine Laserschneidmaschine.

Aus dem Stand der Technik ist es bekannt, in Maschinen zur Bearbeitung metallischer Werkstücke berührungssensitive Displays zu nutzen, auf deren Anzeigefläche variabel graphische Bedienelemente dargestellt werden und Aktionen an der Maschine durch Fingerberührung der graphischen Bedienelemente ausgelöst werden können. Herkömmlicherweise werden dabei Displays verwendet, die lediglich eine Bedienung durch Fingerberührung ohne Handschuh ermöglichen. Dies ist nachteilhaft, da der Bediener an der entsprechenden Maschine oftmals Handschuhe trägt und er diese zum Berühren des Displays nicht ausziehen möchte.

Darüber hinaus geben die berührungssensitiven Displays, die derzeit in Maschinen zur Bearbeitung metallischer Werkstücke verwendet werden, dem Bediener nur eine visuelle Rückmeldung über den Ort der graphischen Bedienelemente, so dass der Bediener bei der Bedienung des Displays immer auf dessen Anzeigefläche blicken muss.

Im Stand der Technik gibt es eine Vielzahl von Technologien, um einem Benutzer bei der Berührung einer Oberfläche eine haptische Rückmeldung zu geben. Beispielsweise zeigt das Dokument WO 2009/037379 A1 eine Vorrichtung zur Erzeugung einer elektrosensorischen Wahrnehmung an einem Finger eines Benutzers durch eine kapazitive Kopplung über einen Isolator, der zwischen einer leitenden Elektrode und dem Finger gebildet ist.

Die Druckschrift US 2014/0354570 A1 offenbart ein berührungssensitives Display, bei dem über einen elektronischen Schaltkreis einem Körperteil, welches das Display berührt, eine haptische Rückmeldung gegeben wird.

Aufgabe der Erfindung ist es, eine Maschine zur Bearbeitung metallischer Werkstücke zu schaffen, deren Bedienung über ein Display mit berührungssensitiver Anzeigefläche verbessert wird.

Diese Aufgabe wird durch die Maschine gemäß Patentanspruch 1 gelöst. Weiterbildungen sind in den abhängigen Ansprüchen definiert.

Die erfindungsgemäße Maschine dient zur Bearbeitung metallischer Werkstücke und umfasst ein Display, das eine berührungssensitive Anzeigefläche zur variablen Anzeige von graphischen Bedienelementen umfasst, welche über deren Berührung auf der Anzeigefläche durch einen Bediener mittels seiner Hand (d. h. mittels seiner Finger) betätigbar sind, um hierdurch Befehle zur Bedienung der Maschine einzugeben.

In einer bevorzugten Ausführungsform ist das Display für eine Betätigung der graphischen Bedienelemente durch Berührung des Bedieners mit und ohne Handschuh eingerichtet. Hierbei können gegebenenfalls an sich bekannten Technologien verwendet werden, die eine Bedienung mit und ohne Handschuh ermöglichen. Beispielsweise kann der durch den Bediener ausgeübte Druck auf das Display durch Annäherung zweier gegenüberliegender Elektroden und der damit verbundenen Kapazitätsänderung erfasst werden. Nichtsdestotrotz kann das Display ggf. auch so ausgestaltet sein, dass es nur für eine Betätigung der graphischen Bedienelemente durch Berührung des Bedieners ohne Handschuh eingerichtet ist.

In dem Display der erfindungsgemäßen Maschine sind darüber hinaus ein oder mehrere Mittel zur variablen Ausbildung von Erhebungen in Bereichen der Anzeigefläche, an denen sich graphische Bedienelemente befinden, vorgesehen, wobei die Erhebungen eine jeweilige Höhe von mindestens 1 mm auf der Anzeigefläche haben. Unter der Höhe einer Erhebung ist dabei der höchste Punkt der entsprechenden Erhebung im Vergleich zu einem Bereich der Anzeigefläche ohne Erhebung zu verstehen. Die Mindesthöhe der Erhebung und auch die weiter unten genannte Maximalhöhe beziehen sich auf einen statischen Zustand der Erhebung, d.h. einen Zustand, bei dem die Höhe der Erhebung gerade nicht verändert wird. Die Erhebung kann beispielsweise als Wölbung ausgestaltet sein.

Das erfindungsgemäße Display weist den Vorteil auf, dass einem Bediener durch ausreichend hohe Erhebungen von mindestens 1 mm eine haptische Rückmeldung über die Position entsprechender graphischer Bedienelemente auf der berührungssensitiven Anzeigefläche gegeben wird. Er muss somit bei der Bedienung der Maschine nicht permanent auf das Display blicken, sondern er kann entsprechende Bedienelemente auch ertasten. Hierdurch wird die Bedienung vereinfacht. Vorzugsweise hat der Bediener dabei die Möglichkeit, die Bedienelemente sowohl mit als auch ohne Handschuh zu betätigen.

In einer besonders bevorzugten Ausführungsform haben die Erhebungen eine jeweilige Höhe von höchstens 5 mm, was eine ausreichende Höhe ist, um die Erhebungen zu ertasten.

In einer weiteren bevorzugten Ausführungsform weisen die Erhebungen in der Anzeigefläche jeweils eine Fläche von mindestens 200 mm² und vorzugsweise von mindestens 225 mm² auf. Darüber hinaus haben die jeweiligen Erhebungen vorzugsweise eine Fläche von höchstens 2500 mm² und insbesondere höchstens 2200 mm². Mit diesen Flächengrößen wird sichergestellt, dass die Bedienelemente noch gut einzeln bedient werden können.

In einer weiteren bevorzugten Ausführungsform weisen die Erhebungen jeweils die Form eines Rechtecks und insbesondere die Form eines Quadrats auf. Vorzugsweise beträgt die Länge einer jeweiligen Kante des Rechtecks zumindest 15 mm. Mit dieser Variante wird sehr gut die Form herkömmlicher Tasten durch die Erhebungen nachgebildet.

In einer weiteren bevorzugten Ausführungsform ist das oder jedes Mittel zur variablen Ausbildung der Erhebungen mit einer Einrichtung zur haptischen Rückkopplung versehen, welche bei der Betätigung eines graphischen Bedienelements ein taktiles Signal emittiert. In einer Variante wird das taktile Signal durch Variation der Höhe der Erhebung im Bereich des betätigten graphischen Bedienelements erzeugt, insbesondere in der Form eines kurzen Oszillationsimpulses. Die hat den Vorteil, dass der Bediener die Quittierung bzw. Bestätigung seiner Eingabe spürt.

Bei der soeben beschriebenen Variation der Höhe kann die Erhebung temporär die Mindesthöhe von 1 mm unterschreiten. Beispielsweise kann sich die Höhe der Erhebung periodisch mit einer hohen Frequenz verändern, wodurch dem Bediener eine Bestätigung in der Form einer Vibration gegeben wird. Gegebenenfalls ist es auch möglich, dass dem Bediener unterschiedliche Arten von Bestätigungen, beispielsweise über verschiedene Vibrationsfrequenzen, rückgemeldet werden. Beispielsweise kann eine positive Rückmeldung gegeben werden, wenn die an das Bedienelement geknüpfte Aktion durch seine Betätigung ausgelöst wird. In gleicher Weise kann eine negative Rückmeldung gegeben werden, wenn aus bestimmten Gründen die an das Bedienelement geknüpfte Aktion aktuell nicht ausgeführt werden kann, weil beispielsweise zuvor zunächst ein anderes Bedienelement betätigt werden muss.

In einer weiteren bevorzugten Ausgestaltung umfasst das oder jedes Mittel zur variablen Ausbildung von Erhebungen ein in der Anzeigefläche integriertes Array aus einer Vielzahl von flexiblen Kammern, die vorzugsweise auf der gesamten Anzeigefläche verteilt sind. Die jeweiligen Kammern sind dabei mit einem Fluid befüllbar und deren Befüllzustand ist mit einer Aktorik veränderbar, um hierdurch variabel die Erhebungen im Bereich der Bedienelemente auszubilden. Beispielsweise können die Kammern pneumatisch mit Luft oder hydraulisch mit einer Flüssigkeit befüllbar sein. Mit dieser Variante können sehr einfach die Erhebungen im Bereich der graphischen Bedienelemente erzeugt werden.

In einer weiteren Variante der erfindungsgemäßen Maschine umfasst das oder jedes Mittel zur variablen Ausbildung von Erhebungen ein in der Anzeigefläche integriertes Array aus einer Vielzahl von Piezoelementen, die beispielsweise aus einer Keramik bestehen und vorzugsweise wiederum auf der gesamten Anzeigefläche verteilt sind. Die Verformung der jeweiligen Piezoelemente ist durch Anlegen einer elektrischen Spannung mittels einer Spannungsquelle veränderbar, wodurch variabel die Erhebungen im Bereich der graphischen Bedienelemente ausgebildet werden können.

In einer besonders bevorzugten Ausführungsform ist das oder jedes Mittel zur variablen Ausbildung von Erhebungen auch zur Detektion der Betätigung der graphischen Bedienelemente durch Berührung des Bedieners eingerichtet.

In einer bevorzugten Variante, in der die obige Ausführungsform mit einem Array aus einer Vielzahl von flexiblen Kammern kombiniert wird, ist für dieses Array eine Drucksensorik zur Messung des Fluidrucks in den jeweiligen Kammern vorgesehen, um die Betätigung eines graphischen Bedienelements durch Berührung des Bedieners über einen Anstieg des Fluiddrucks einer oder mehrerer Kammern am Ort des graphischen Bedienelements zu detektieren.

In einer bevorzugten Ausführungsform der soeben beschriebenen Variante ist das Display derart ausgestaltet, dass bei Betätigung des graphischen Bedienelements ferner die Stärke des durch den Bediener ausgeübten Drucks über den gemessenen Fluiddruck erfasst wird, wobei der durch den Bediener eingegebene Bedienbefehl von der Stärke des Drucks abhängt. Auf diese Weise kann der Bediener über ein einzelnes Bedienelement unterschiedliche Bedienbefehle durch Variation des Berührdrucks spezifizieren. Beispielswese kann er über den Berührdruck einen einzugebenden Zahlenwert spezifizieren, den er ansonsten über eine Zifferntastatur eingeben würde.

In einer weiteren Ausführungsform, in der ein Array aus einer Vielzahl von Piezoelementen verwendet wird, ist für dieses Array eine Einrichtung zur Spannungsmessung vorgesehen, um die Betätigung eines graphischen Bedienelements durch Berührung des Bedieners über das Auftreten einer elektrischen Spannung an einem oder mehreren Piezoelementen am Ort des graphischen Bedienelements zu detektieren. Hierbei macht man sich die Tatsache zunutze, dass durch Druckausübung auf Piezoelemente eine Spannung erzeugt wird.

In einer weiteren bevorzugten Ausführungsform ist das Display und vorzugsweise das oder jedes Mittel zur variablen Ausbildung von Erhebungen dazu eingerichtet, bei einer Betätigung eines graphischen Bedienelements den vom Bediener auf der Anzeigefläche ausgeübten Druck zu erfassen, um in Abhängigkeit von dem erfassten Druck unterschiedliche Aktionen auszulösen. Beispielsweise kann bei einem Druck unterhalb einer bestimmten Schwelle die für das Bedienelement vorgesehene Bedienaktion ausgelöst werden, wohingegen bei einem höheren Druck ein Kontextmenü auf dem Display dargestellt wird.

In einer Variante ist das Display der erfindungsgemäßen Maschine an einem Teil der Maschine befestigt, in dem die Bearbeitung der metallischen Werkstücke im Betrieb der Maschine stattfindet. Nichtsdestotrotz ist es auch möglich, dass das Display zur Aufstellung an einem Ort eingerichtet ist, an dem es nicht an einem Teil der Maschine befestigt ist, in dem die Bearbeitung der metallischen Werkstücke im Betrieb der Maschine stattfindet. Beispielsweise kann das Display Bestandteil einer Konsole sein, die separat zur restlichen Maschine verfahrbar ist. Das Display ist dabei lediglich kommunikationstechnisch bzw. elektrisch an die Maschine gekoppelt.

Neben der oben beschriebenen Maschine betrifft die Erfindung ein Display für eine solche Maschine, wobei das Display eine berührungssensitive Anzeigefläche zur variablen Anzeige von graphischen Bedienelementen umfasst, welche über deren Berührung auf der Anzeigefläche durch einen Bediener mittels seiner Hand betätigbar sind, um hierdurch Befehle zur Bedienung der Maschine einzugeben. Das Display weist ein oder mehrere Mittel zur variablen Ausbildung von Erhebungen in Bereichen der Anzeigefläche auf, an denen sich graphische Bedienelemente befinden, wobei die Erhebungen eine jeweilige Höhe von mindestens 1 mm auf der Anzeigefläche haben.

Das Display ist somit dazu eingerichtet, als ein Display für die erfindungsgemäße Maschine zu arbeiten. In einer bevorzugten Ausgestaltung ist dieses Display auch dazu eingerichtet, als ein Display für eine Maschine gemäß einer oder mehrerer der oben beschriebenen bevorzugten Ausführungsformen zu arbeiten. Mit anderen Worten können Merkmale der oben beschriebenen bevorzugten Ausführungsformen der Maschine in dem Display der Maschine realisiert sein, sofern die Merkmale das Display betreffen.

Ausführungsbeispiele der Erfindung werden nachfolgend anhand der beigefügten Figuren detailliert beschrieben.

Es zeigen:
- Fig. 1: eine schematische Seitenansicht einer Ausführungsform einer erfindungsgemäßen Maschine zur Bearbeitung metallischer Werkstücke;
- Fig. 2: eine perspektivische Ansicht einer verfahrbaren Konsole, die in einer anderen Ausführungsform einer erfindungsgemäßen Maschine zum Einsatz kommt;
- Fig. 3: eine perspektivische Detaildarstellung des in Fig. 1 und Fig. 2 wiedergegebenen Displays;
- Fig. 4: eine schematische Darstellung, welche das Prinzip der Ausbildung von Erhebungen in dem Display der Fig. 3 verdeutlicht; und
- Fig. 5: eine Draufsicht auf einen Abschnitt der unteren Kante des Displays aus Fig. 3 mit den darin ausgebildeten Erhebungen gemäß Fig. 4.

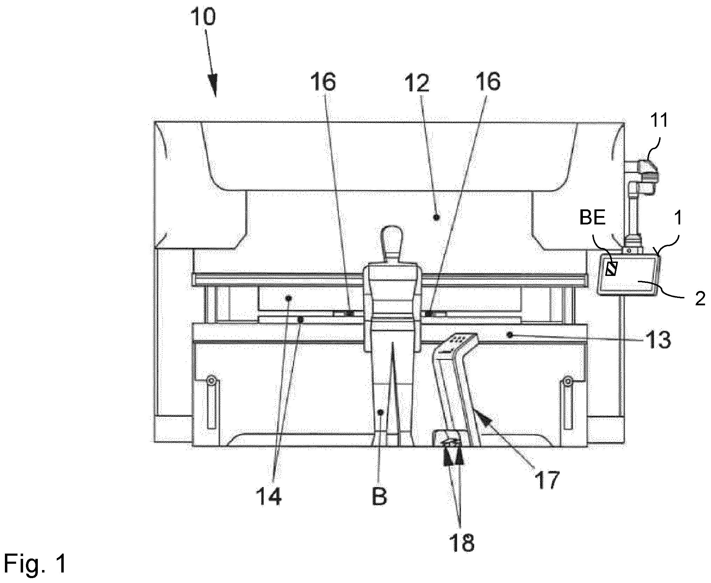

Nachfolgend wird eine Ausführungsform der Erfindung anhand einer Maschine zur Bearbeitung metallischer Werkstücke in der Form einer Abkantpresse beschrieben. Eine solche Maschine ist in Fig. 1 gezeigt und dort mit Bezugszeichen 10 bezeichnet. Nichtsdestotrotz ist die Erfindung auch für andere Maschinen zur Bearbeitung metallischer Werkstücke einsetzbar. Hierunter fallen insbesondere alle Arten von Biegemaschinen sowie Schneidmaschinen, wie z. B. Laserschneidmaschinen oder Plasmaschneidmaschinen.

Die in Fig. 1 gezeigte Maschine 10 ist als Abkantpresse ausgebildet und umfasst in an sich bekannter Weise eine Oberwange 12 und eine Unterwange 13, an der jeweilige Biegewerkzeuge 14 befestigt sind. Ein Bediener B schiebt ein zu biegendes Blech zwischen die Werkzeuge 14 bis zu entsprechenden Anschlagsfingern 16 ein und kann anschließend den Biegeprozess starten und kontrollieren. Hierfür kann er zum einen ein Bedienpult 17 mit Fußpedalen 18 nutzen. Darüber hinaus steht ihm ein Display 1 mit einer berührungssensitiven Anzeigefläche 2 zur Verfügung, das über einen Gelenkmechanismus 11 aus mehreren aneinander angelenkten Armen an der rechten Seite der Maschine 10 angebracht ist. Dieses Display stellt einen erfindungswesentlichen Bestandteil der Maschine 10 dar.

Über das Display 1 kann der Bediener B eine Vielzahl von Bedienbefehlen an die Maschine 10 bzw. eine entsprechende Steuereinrichtung der Maschine 10 geben. Hierfür werden ihm graphische Bedienelemente auf der Anzeigefläche 2 des Displays 1 angezeigt, wobei in Fig. 1 beispielhaft lediglich ein einzelnes graphisches Bedienelement BE als schraffiertes Rechteck wiedergebeben ist. Durch Berührung der jeweiligen Bedienelemente durch einen Finger des Bedieners B wird die daran geknüpfte Bedienaktion in der Maschine ausgelöst.

In einer herkömmlichen Maschine ist das Display derart ausgestaltet, dass es nur durch direkte Berührung über die Haut des Bedieners ohne Handschuh bedient werden kann. Oftmals ist es jedoch wünschenswert, dass der Bediener das Display auch mit Handschuhen bedienen kann, da er bei seiner Tätigkeit an der Maschine in der Regel Handschuhe trägt und er diese nicht zur Ausführung einer Bedienaktion am Display ausziehen möchte. Ferner kann der Bediener die Position von graphischen Bedienelementen auf einem Display einer herkömmlichen Maschine nur visuell und nicht haptisch wahrnehmen.

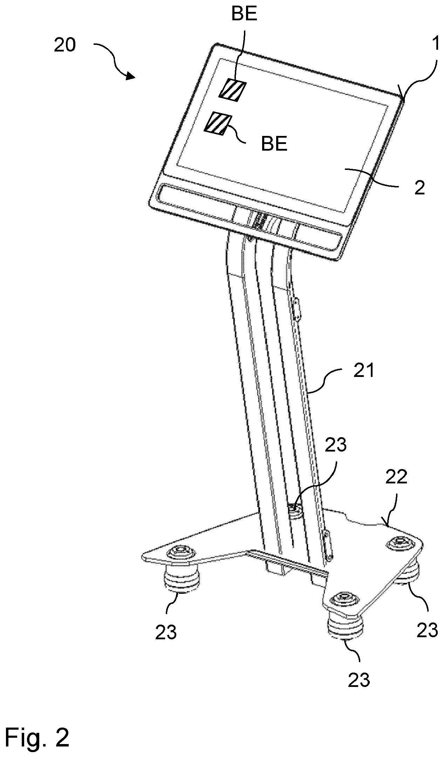

Diese Nachteile werden mit dem Display 1 behoben, wie weiter unten näher beschrieben wird. Dabei ist es nicht zwangsläufig erforderlich, dass das Display 1 eine mechanische Verbindung zur restlichen Maschine aufweist, wie dies in Fig. 1 der Fall ist. Insbesondere kann das Display Bestandteil einer verfahrbaren Konsole sein, die separat von der restlichen Maschine positioniert werden kann. Fig. 2 zeigt eine solche verfahrbare Konsole. Diese Konsole ist mit dem Bezugszeichen 20 bezeichnet und umfasst einen vertikalen Träger 21, an dessen oberem Ende das Display 1 mit der berührungssensitiven Anzeigefläche 2 angebracht ist. Zur Veranschaulichung sind dabei zwei graphische Bedienelemente BE auf der Anzeigefläche dargestellt. Das untere Ende des Trägers 21 ist mit einem verfahrbaren Standfuß 22 verbunden, an dem sich vier arretierbare Rollen 23 befinden, über welche die verfahrbare Konsole 20 an eine beliebige Stelle im Umfeld der Maschine 10 positioniert werden kann. Die Konsole 20 ist lediglich über (nicht gezeigte) Kabel elektrisch und kommunikationstechnisch an die Maschine angebunden.

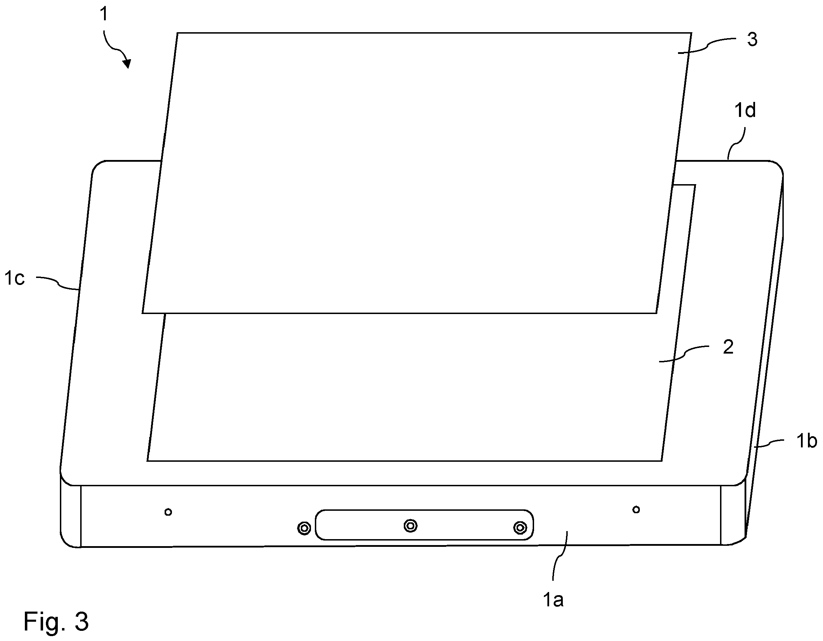

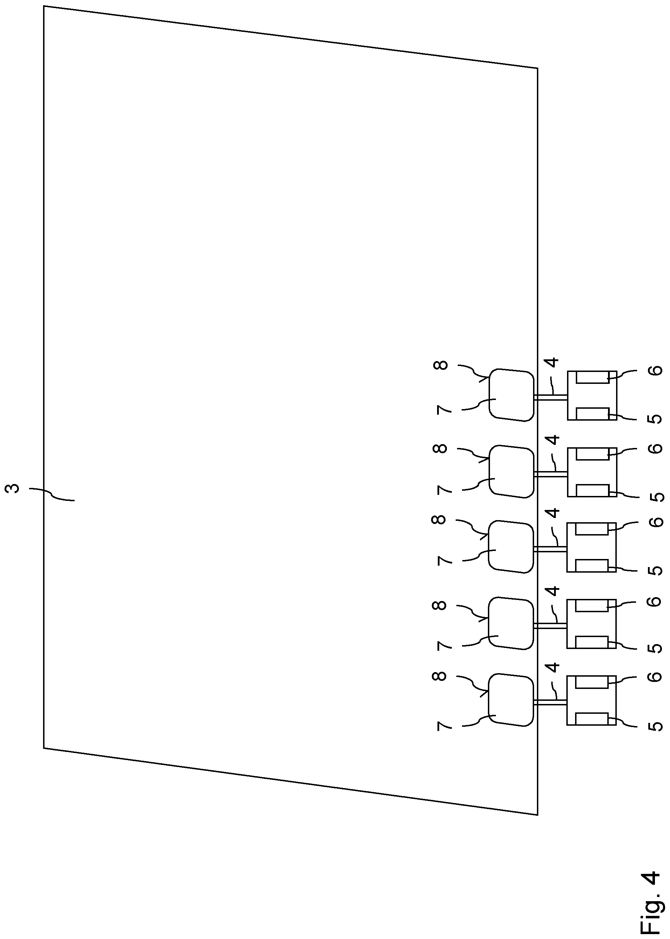

Fig. 3 zeigt eine perspektivische Detailansicht des Displays 1 aus Fig. 1 und Fig. 2. Die untere Kante des Displays ist mit Bezugszeichen 1a, die rechte Kante mit Bezugszeichen 1b, die linke Kante mit Bezugszeichen 1c und die obere Kante mit Bezugszeichen 1d bezeichnet. Die Anzeigefläche 2 enthält eine oberste Schicht 3, die zur Verdeutlichung im Abstand zur restlichen Anzeigefläche dargestellt ist. Diese Schicht ist aus flexiblem synthetischem Material gebildet und umfasst ein Array aus einer Vielzahl von Kammern, die in der hier beschriebenen Ausführungsform hydraulisch mit einer Flüssigkeit befüllbar und entleerbar sind. Diese Kammern sind teilweise aus der Ansicht der Fig. 4 ersichtlich und dort mit Bezugszeichen 7 bezeichnet. Fig. 4 zeigt dabei lediglich die Schicht 3 der Anzeigefläche 2. Beispielhaft sind in Fig. 4 auch nur fünf Kammern in einer unteren Reihe der Schicht 3 gezeigt. Die Kammern sind jedoch als Array in regelmäßigen Abständen über die gesamte Schicht 3 verteilt.

Die in Fig. 4 dargestellten Kammern 7 sind im voll befüllten Zustand wiedergegeben, was zur Folge hat, dass durch die Kammern Erhebungen 8 ausgebildet werden. Im Betrieb des Displays 1 werden die Erhebungen 8 immer nur an Positionen ausgebildet, an denen sich auch graphische Bedienelemente BE auf der Anzeigefläche 2 befinden. Die angezeigten Bedienelemente und deren Positionen sind dabei je nach aufgerufener Menüseite der auf dem Display angezeigten Bedienoberfläche variabel. In Abhängigkeit von den aktuell angezeigten graphischen Bedienelementen werden immer diejenigen Kammern befüllt, deren Positionen sich mit den Positionen der graphischen Bedienelemente decken.

Die einzelnen Kammern 7 sind derart ausgestaltet, dass sie bei voller Befüllung eine Erhebung von mindestens 1 mm gegenüber einem Oberflächenbereich der Anzeigefläche ausbilden, an dem kein Bedienelement liegt und eine entsprechende Kammer nicht befüllt ist. Zur Befüllung der Kammern ist jede einzelne Kammer mit einer Leitung 4 verbunden, die zu einem jeweiligen Aktor 5 und einem jeweiligen Drucksensor 6 führt, die nur schematisch wiedergegeben sind und im Display 1 integriert sind. Die Gesamtheit der Aktoren 6 stellt eine Ausführungsform einer Aktorik im Sinne der Patentansprüche dar. Ebenso stellt die Gesamtheit der Drucksensoren 6 eine Ausführungsform einer Drucksensorik im Sinne der Patentansprüche dar.

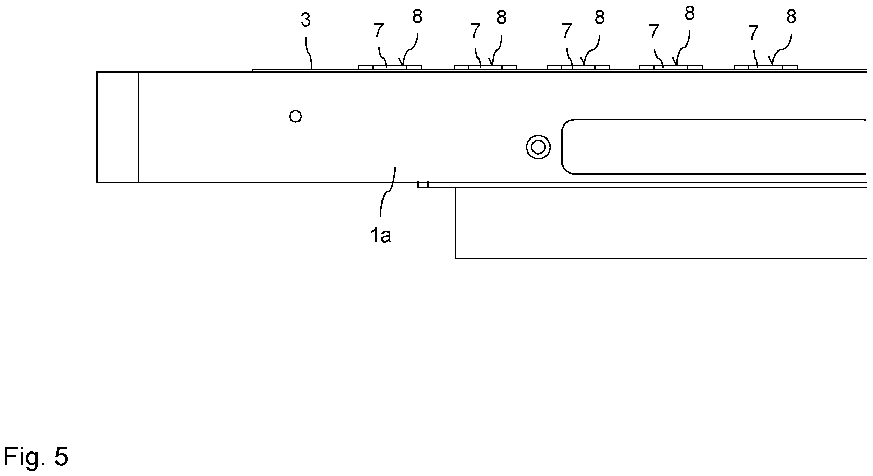

Der Aktor 5 ist als eine Pumpe mit einem damit verbundenen Ventil ausgestaltet und er ist mit einem nicht dargestellten Flüssigkeitsreservoir verbunden, das im Display vorgesehen ist. Der Aktor 5 bewirkt in an sich bekannter Weise eine Befüllung der Kammer 7 über die Leitung 4 mit Flüssigkeit aus dem Flüssigkeitsreservoir. Analog bewirkt der Aktor eine entsprechende Entleerung der Kammer 7 durch Auslass von Flüssigkeit über die Leitung 4. Die in Fig. 4 gezeigten Kammern 7 sind auch nochmals aus der Ansicht der Fig. 5 ersichtlich. Wie man erkennt, erheben sich die Kammern 7 gegenüber der restlichen Oberfläche, wodurch die Erhebungen 8 entstehen.

Die Größe der Kammern 7 ist derart gewählt, dass sie im befüllten Zustand quadratische Tasten darstellen, die auch mittels eines Handschuhs gut ertastbar sind. Die Kantlänge der quadratischen Tasten liegt vorzugsweise bei 15 mm oder mehr. Das Array aus Kammern 7 dient ferner zur Detektion der Berührung der Anzeigefläche 2 mittels der Finger des Bedieners B, wobei der Bediener hierzu auch Handschuhe tragen kann.

Um diese Berührung zu detektieren, sind die einzelnen Leitungen 4 jeweils mit einem entsprechenden Drucksensor 6 verbunden, über den der Flüssigkeitsdruck in der jeweiligen Kammer gemessen wird. Dabei ist bekannt, welcher Flüssigkeitsdruck bei voller Befüllung der jeweiligen Kammer anliegt. Kommt es nunmehr zu einer Veränderung des Flüssigkeitsdrucks durch eine Kraftausübung eines Fingers auf die entsprechende voll befüllte Kammer, wird dies über den jeweiligen Drucksensor erfasst. Überschreitet die Druckänderung eine vorgegebene Schwelle, wird eine Betätigung desjenigen graphischen Bedienelements detektiert, das sich an der Position der voll befüllten Kammer befindet. Als Folge wird dann die Steueraktion ausgelöst, welche an die Betätigung des graphischen Bedienelements geknüpft ist.

Wie soeben erläutert, ermöglicht das Array aus Kammern 7 auch die Detektion einer entsprechenden Berührung mit dem Finger eines Bedieners. Diese Detektion beruht auf der Erfassung einer Druckänderung und ist somit unabhängig davon, ob der Bediener einen Handschuh trägt oder nicht. Auf diese Weise kann eine Bedienung des Displays mit und ohne Handschuh gewährleistet werden.

In abgewandelten Ausführungsformen können auch beliebige andere Technologien genutzt werden, um die Erhebungen 8 auszubilden bzw. eine entsprechende Berührung des Displays mit und ohne Handschuh zu gewährleisten. Darüber hinaus besteht auch die Möglichkeit, dass die Technologie zur Ausbildung der Erhebungen unabhängig von der Technologie ist, mit der die Berührung des Displays detektiert wird.

Als weitere Technologie zur Ausbildung der Erhebungen können beispielsweise Piezoelemente genutzt werden, welche derart ausgestaltet sind, dass sie ihre Form durch Anlegen einer elektrischen Spannung verändern und auf diese Weise die Erhebungen bilden können. Solche Piezoelemente können ggf. auch zur Detektion der Berührung der Anzeigefläche 2 genutzt werden, indem eine Verformung der Piezoelemente über das Auftreten einer Spannung an diesen Elementen bei Druckausübung durch den Finger des Bedieners erfasst wird.

Zur Detektion der Berührung der Anzeigefläche können auch andere Technologien genutzt werden, welche die Berührung auch dann erfassen, wenn von dem Bediener ein Handschuh getragen wird. Beispielsweise kann ein elektrisches Gitter vorgesehen sein, bei dem an entsprechenden Gitterpositionen ein Kontaktschluss bzw. eine Kapazitätsänderung durch Druckausübung mittels des Fingers des Bedieners erfasst wird und basierend darauf die Berührung detektiert wird. Gegebenenfalls kann zur Detektion der Berührung der Anzeigefläche auch eine Technologie genutzt werden, mit der nur Berührungen ohne Handschuh erfasst werden können.

In einer weiteren abgewandelten Ausführungsform kann das Display auch derart ausgestaltet sein, dass in Abhängigkeit von der Größe des Drucks eines Fingers auf ein entsprechendes Bedienelement unterschiedliche Folgeaktionen ausgelöst werden. Beispielsweise kann bei einer geringen Druckausübung die originär an das Bedienelement gekoppelte Aktion ausgeführt werden, wohingegen bei einer größeren Druckausübung ein Optionsmenu auf dem Display angezeigt wird.

In einer weiteren Modifikation der Ausführungsform der Fig. 4 können die einzelnen Kammern 7 auch ein Rückkopplungssignal an den zur Betätigung genutzten Finger des Bedieners geben. Beispielsweise kann bei der Betätigung eines Bedienelements der Flüssigkeitsdruck in der Kammer am Ort des Bedienelements über den entsprechenden Aktor variiert werden, gegebenenfalls auch mit einer hohen Frequenz, so dass eine Vibration vermittelt wird. Auf diese Weise bekommt der Bediener die Rückmeldung, dass das Bedienelement tatsächlich betätigt wurde. Gegebenenfalls können unterschiedliche Arten von Rückkopplungssignalen über die Kammer erzeugt werden, um beispielsweise dem Bediener eine negative Rückmeldung zu geben, wenn aus bestimmen Gründen die an das Bedienelement geknüpfte Aktion nicht ausgeführt werden kann, weil hierfür zuvor ein anderes Bedienelement betätigt sein muss. Das negative Rückkopplungssignal kann sich gegenüber einem anderen Rücckopplungssignal beispielsweise durch die Frequenz seiner Vibrationen unterscheiden. Die soeben erläuterten Rückkopplungssignale können auch unter Verwendung von anderen Technologien erzeugt werden, beispielsweise über Vibrationen der oben beschriebenen Piezoelemente.

Die im Vorangegangenen beschriebenen Ausführungsformen weisen eine Reihe von Vorteilen auf. Insbesondere wird eine Maschine zur Bearbeitung von metallischen Werkstücken geschaffen, bei der Bedienaktionen über die Berührung einer berührungssensitiven Anzeigefläche eines Displays mit und ohne Handschuhe ausgelöst werden können und dabei dem Bediener haptisch über Erhebungen die Position entsprechender Bedienelemente auf der Anzeigefläche vermittelt wird. Der Bediener muss deshalb bei der Bedienung der Bedienelemente nicht dauerhaft auf die Anzeigefläche des Displays zu blicken. Die Erhebungen sind dabei derart ausgestaltet, dass sie vom Bediener auch bei Tragen eines Handschuhs gut ertastet werden können.

### B ezugszei chenli ste

- 1: Display
- 1a, 1b, 1c, 1d: Kanten des Displays
- 2: Anzeigefläche
- 3: Schicht aus Kammern
- 4: Leitungen
- 5: Aktoren
- 6: Drucksensoren
- 7: Kammern
- 8: Erhebungen
- 10: Maschine zur Bearbeitung metallischer Werkstücke
- 11: Gelenkmechanismus
- 12: Oberwange
- 13: Unterwange
- 14: Werkzeuge
- 16: Anschlagsfinger
- 17: Bedienpult
- 18: Fußpedal
- 20: Verfahrbare Konsole
- 21: vertikaler Träger
- 22: Standfuß
- 23: Rollen
- BE: graphisches Bedienelement
- B: Bediener

## Patentansprüche

1. Maschine zur Bearbeitung metallischer Werkstücke, insbesondere Biegemaschine oder Schneidmaschine, mit einem Display (1), das eine berührungssensitive Anzeigefläche (2) zur variablen Anzeige von graphischen Bedienelementen (BE) umfasst, welche über deren Berührung auf der Anzeigefläche (2) durch einen Bediener (B) mittels seiner Hand betätigbar sind, um hierdurch Befehle zur Bedienung der Maschine (10) einzugeben;
**dadurch gekennzeichnet, dass**
das Display (1) ein oder mehrere Mittel (3, 4, 5, 6, 7) zur variablen Ausbildung von Erhebungen (8) in Bereichen der Anzeigefläche (2), an denen sich graphische Bedienelemente (BE) befinden, aufweist, wobei die Erhebungen (8) eine jeweilige Höhe von mindestens 1 mm auf der Anzeigefläche (2) haben.

2. Maschine nach Anspruch 1, **dadurch gekennzeichnet, dass** die Erhebungen (8) eine jeweilige Höhe von höchstens 5 mm aufweisen.

3. Maschine nach Anspruch 1 oder 2, **dadurch gekennzeichnet, dass** die Erhebungen (8) jeweils eine Fläche von mindestens 200 mm² und vorzugsweise von höchstens 2500 mm² aufweisen.

4. Maschine nach einem der vorhergehenden Ansprüche, **dadurch gekennzeichnet, dass** die Erhebungen (8) jeweils die Form eines Rechtecks aufweisen und vorzugsweise die Länge einer jeweiligen Kante des Rechtecks zumindest 15 mm beträgt.

5. Maschine nach einem der vorhergehenden Ansprüche, **dadurch gekennzeichnet, dass** das oder jedes Mittel (3, 4, 5, 6, 7) zur variablen Ausbildung von Erhebungen (8) mit einer Einrichtung zur haptischen Rückkopplung versehen ist, welche bei der Betätigung eines graphischen Bedienelements (BE) ein taktiles Signal emittiert.

6. Maschine nach einem der vorhergehenden Ansprüche, **dadurch gekennzeichnet, dass** das oder jedes Mittel (3, 4, 5, 6, 7) zur variablen Ausbildung von Erhebungen (8) ein in der Anzeigefläche (2) integriertes Array aus einer Vielzahl von flexiblen Kammern (7) umfasst, die mit einem Fluid befüllbar sind und deren Befüllzustand mit einer Aktorik (5) veränderbar ist, um hierdurch variabel die Erhebungen (8) im Bereich der Bedienelemente (BE) auszubilden.

7. Maschine nach einem der vorhergehenden Ansprüche, **dadurch gekennzeichnet, dass** das oder jedes Mittel (3, 4, 5, 6, 7) zur variablen Ausbildung von Erhebungen (8) ein in der Anzeigefläche (2) integriertes Array aus einer Vielzahl von Piezoelementen umfasst, deren Verformung durch Anlegen einer elektrischen Spannung mittels einer Spannungsquelle veränderbar ist, um hierdurch variabel die Erhebungen (8) im Bereich der graphischen Bedienelemente (BE) auszubilden.

8. Maschine nach einem der vorhergehenden Ansprüche, **dadurch gekennzeichnet, dass** das oder jedes Mittel (3, 4, 5, 6, 7) zur variablen Ausbildung von Erhebungen (8) auch zur Detektion der Betätigung der graphischen Bedienelemente (BE) durch Berührung des Bedieners (B) eingerichtet ist.

9. Maschine nach Anspruch 8 in Kombination mit Anspruch 6, **dadurch gekennzeichnet, dass** für das Array aus der Vielzahl von flexiblen Kammern (7) eine Drucksensorik (6) zur Messung des Fluiddrucks in den jeweiligen Kammern (8) vorgesehen ist, um die Betätigung eines graphischen Bedienelements (BE) durch Berührung des Bedieners (B) über einen Anstieg des Fluiddrucks einer oder mehrerer Kammern (7) am Ort des graphischen Bedienelements (BE) zu detektieren.

10. Maschine nach Anspruch 9, **dadurch gekennzeichnet, dass** das Display (1) derart ausgestaltet ist, dass bei Betätigung des graphischen Bedienelements (BE) ferner die Stärke des durch den Bediener (BE) ausgeübten Drucks über den gemessenen Fluiddruck erfasst wird, wobei der durch den Bediener (BE) eingegebene Bedienbefehl von der Stärke des Drucks abhängt.

11. Maschine nach Anspruch 8 oder 9 in Kombination mit Anspruch 7, **dadurch gekennzeichnet, dass** für das Array aus der Vielzahl von Piezoelementen eine Einrichtung zur Spannungsmessung vorgesehen ist, um die Betätigung eines graphischen Bedienelements (BE) durch Berührung des Bedieners (BE) über das Auftreten einer elektrischen Spannung an einem oder mehreren Piezoelementen am Ort des graphischen Bedienelements (BE) zu detektieren.

12. Maschine nach einem der vorhergehenden Ansprüche, **dadurch gekennzeichnet, dass** das Display (1) dazu eingerichtet ist, bei einer Betätigung eines graphischen Bedienelements (BE) den vom Bediener (B) auf die Anzeigefläche (2) ausgeübten Druck zu erfassen, um in Abhängigkeit von dem erfassten Druck unterschiedliche Aktionen auszulösen.

13. Maschine nach einem der vorhergehenden Ansprüche, **dadurch gekennzeichnet, dass** das Display (1) an einem Teil der Maschine befestigt ist, in dem die Bearbeitung der metallischen Werkstücke im Betrieb der Maschine (10) stattfindet.

14. Maschine nach einem der Ansprüche 1 bis 12, **dadurch gekennzeichnet, dass** das Display (1) zur Aufstellung an einem Ort eingerichtet ist, an dem es nicht an einem Teil der Maschine befestigt ist, in dem die Bearbeitung der metallischen Werkstücke im Betrieb der Maschine (10) stattfindet.

15. Display für eine Maschine (10) zur Bearbeitung metallischer Werkstücke, insbesondere für eine Biegemaschine oder Schneidmaschine, wobei das Display (1) eine berührungssensitive Anzeigefläche (2) zur variablen Anzeige von graphischen Bedienelementen (BE) umfasst, welche über deren Berührung auf der Anzeigefläche (2) durch einen Bediener (B) mittels seiner Hand betätigbar sind, um hierdurch Befehle zur Bedienung der Maschine (10) einzugeben;
**dadurch gekennzeichnet, dass**
das Display (1) ein oder mehrere Mittel (3, 4, 5, 6, 7) zur variablen Ausbildung von Erhebungen (8) in Bereichen der Anzeigefläche (2), an denen sich graphische Bedienelemente (BE) befinden, aufweist, wobei die Erhebungen (8) eine jeweilige Höhe von mindestens 1 mm auf der Anzeigefläche (2) haben.

16. Display nach Anspruch 15, **dadurch gekennzeichnet, dass** das Display (1) dazu eingerichtet ist, als ein Display (1) für eine Maschine (10) nach einem der Ansprüche 2 bis 14 zu arbeiten.
